# EUROPEAN PATENT SPECIFICATION

(11) **EP 1 254 880 B1**
(45) Date of publication and mention of the grant of the patent: **04.09.2019**
(21) Application number: 01948976.4
(22) Date of filing: 01.02.2001
(51) Int. Cl.: C06D 5/00, B60R 21/26

(54) **GAS-GENERATING AGENT COMPOSITION COMPRISING TRIAZINE DERIVATIVE**
TRIAZINDERIVATE ENTHALTENDE, GASERZEUGENDE REAKTIONSMISCHUNG
COMPOSITION CONTENANT UN AGENT DE PRODUCTION DE GAZ AINSI QU'UN DERIVE TRIAZINE

(30) Priority: 04.02.2000 JP 2000027647
(43) Date of publication of application: 06.11.2002
(73) Proprietor: Daicel Chemical Industries, Ltd., Kita-ku, Osaka-shi Osaka 530-0001 (JP)
(72) Inventor: WU, Jianzhou, Himeji-shi, Hyogo 671-1212 (JP); YAMATO, Yo, Himeji-shi, Hyogo 671-1234 (JP)
(74) Representative: Grünecker Patent- und Rechtsanwälte PartG mbB
(86) International application number: PCT/JP2001/000711
(87) International publication number: WO 2001/056953

(56) References cited:
- EP-A1- 0 949 225
- EP-A2- 0 820 971
- WO-A-96/26169
- WO-A1-99/57083
- DE-A1- 19 932 466
- US-A- 3 473 981
- US-A- 5 608 183
- US-A- 5 773 754

## Description

### Field of the Invention

The present invention relates to a gas generating composition suitable for an air bag restraining system of automobiles and the like, its molded article and an inflator for an air bag using the same.

### Related Art

As a gas generating agent for an air bag as a passenger-protecting system in automobiles, a composition using sodium azide has been often used so far. However, a toxicity to human bodies [LD₅₀ (oral-rat) = 27 mg/kg] or hazard in handling of sodium azide has been regarded as a serious problem. Therefore, as safe non-azide based gas generating compositions, gas generating compositions containing various nitrogen-containing organic compounds have been developed to replace the above composition.

For example, US-A 4,909,549 discloses a composition comprising hydrogen-containing tetrazole or triazole compounds and an oxygen-containing oxidizing agent. US-A 4,370,181 discloses a gas generating composition comprising a hydrogen-free bitetrazole metal salt and an oxygen-free oxidizing agent. US-A 4,369,079 discloses a gas generating composition comprising a hydrogen-free bitetrazole metal salt and an alkali metal nitrate, an alkali metal nitrite, an alkaline earth metal nitrate, an alkaline earth metal nitrite or a mixture thereof. US-A 5,542,999 discloses a gas generating agent comprising a fuel such as GZT, TAGN, NG (nitroguanidine), NTO and the like, a basic copper nitrate, a catalyst for reducing toxic gases and a coolant. JP-A 10-72273 discloses a gas generating agent comprising a bitetrazole metal salt, a bitetrazole ammonium salt or aminotetrazole and ammonium nitrate.

However, the non-azide based gas generating composition is problematic in combustion temperature, burning rate, phase transfer, amounts of generated carbon monoxide and nitrogen oxides, a gas output and the like. For example, the gas generating composition of US-A 4,369,079has a high combustion temperature, and requires a large amount of a coolant in actual use. The composition of US-A 5,542,999 has a low burning rate, and may not be completely burned in a short time. In the gas generating agent of JP-A 10-72273, a shape of the molded article is changed due to phase transfer of ammonium nitrate in the range of the use temperature, which damages a molded article of the gas generating agent, and in result, stable combustion cannot be conducted. Further, in the related arts on these non-azide based gas generating agents, tetrazoles, nitroguanidine and TAGN are used as the fuel of the gas generating agent. However, these compounds are all hazardous materials, and much care must be taken in view of a safety when handling the same.

WO 99/57083 A1 discloses a gas generating composition containing a nitrogen-containing compound, an oxidizing agent, a binder and a slag-forming agent.

US 5773754 A discloses a gas generating composition comprising trihydrazinotriazine as a fuel, an oxidizing agent and a binder.

EP 0949225 A1 discloses a gas generating composition comprising at least a guanidine derivative and a heterocyclic organic acid, and an oxidizing agent comprising at least a copper nitrate and a transition metal oxide.

US 3473981 relates to a consolidated gas-generating composition comprising a major proportion of ammonium nitrate in intimate mixture with a rubber binder and between about 4 and about 8% by weight of melamine.

### Disclosure of the Invention

Accordingly, an object of the invention is to provide a gas generating composition which is low in combustion temperature, high in burning rate, reduced in amounts of generated carbon monoxide and nitrogen oxides, good in combustion stability and high in safety at the time of handling, its molded article and an inflator for an air bag using the same.

The invention provides a gas generating composition comprising (a) 15 to 45 wt% of melamine; (b) 55 to 85 wt% of a basic copper nitrate, and (c) 0.1 to 15 wt% of a binder which is at least one selected from the group consisting of carboxymethylcellulose, sodium carboxymethylcellulose, potassium carboxymethylcellulose, ammonium carboxymethylcellulose, cellulose acetate, cellulose acetatebutylate, methyl cellulose, ethyl cellulose, hydroxyethyl cellulose, ethylhydroxyethyl cellulose, hydroxypropyl cellulose, carboxymethylethyl cellulose, fine crystalline cellulose, polyarylic amide, amine products of polyacrylic amide, polyacrylic hydrazid, a copolymer of an acrylic amide and a metal salt of acrylic acid, a copolymer of polyacrylic amide and polyacrylic ester, polyvinyl alcohol, acrylic rubber, guar gum, starch and silicone.

Further, the invention provides a molded article in the form of a single-perforated cylinder, a perforated (porous) cylinder or pellets obtained from the gas generating composition.

Still further, the invention provides an inflator for an air bag using the gas generating composition and the molded article.

The gas generating composition and its molded article of the invention are easy to handle because of a low toxicity and less hazard. Moreover, a burning rate is high, a combustion temperature is low, and amounts of generated carbon monoxide and nitrogen oxides are reduced in the combustion.

### Embodiments of the Invention

Melamine as component (a) which is used in the invention is preferable because the toxicity is low and in combination with component (b), the combustion temperature is low and the burning rate is increased.

With respect to the oxidizing agent as component (b) which is used in the invention, a basic copper nitrate is employed.

A basic copper nitrate has, in comparison with ammonium nitrate as an oxidizing agent, an excellent thermal stability because no phase transition occurs in the range of the use temperature and a melting point is high. Further, since a basic copper nitrate acts to decrease a combustion temperature of a gas generating agent, amounts of generated nitrogen oxides can be reduced.

The gas generating composition of the invention further contains a binder as component (c) for increasing a strength of a molded article.

As the binder, at least one selected from carboxymethylcellulose (CMC), sodium carboxymethylcellulose (CMCNa), potassium carboxymethylcellulose, ammonium carboxymethylcellulose, cellulose acetate, cellulose acetate butyrate (CAB), methyl cellulose (MC), ethyl cellulose (EC), hydroxyethyl cellulose (HEC), ethylhydroxyethyl cellulose (EHEC), hydroxypropyl cellulose (HPC), carboxymethylethyl cellulose (CMEC), fine crystalline cellulose, polyacrylic amide, amine products of polyacrylic amide, polyacrylic hydrazide, a copolymer of an acrylic amide and a metal salt of acrylic acid, a copolymer of polyacrylic amide and polyacrylic ester compound, polyvinyl alcohol, acrylic rubber, guar gum, starch and silicone is used. Among these, sodium carboxymethylcellulose (CMCNa) and guar gum are preferable in consideration of a stickiness, cost and an ignitability.

The gas generating composition of the invention can further contain an additive as component (d) for reducing amounts of toxic nitrogen oxides and carbon monoxide generated after combustion by decreasing a combustion temperature.

As the additive, at least one selected from metal oxides such as copper oxide, iron oxide, zinc oxide, cobalt oxide, manganese oxide, molybdenum oxide, nickel oxide, bismuth oxide, silica and alumina, metal hydroxides such as aluminum hydroxide, cobalt hydroxide and iron hydroxide, metal carbonates or basic metal carbonates such as cobalt carbonate, calcium carbonate, a basic zinc carbonate and a basic copper carbonate, composite compounds of metal oxides or hydroxides such as Japanese acid clay, kaolin, talc, bentonite, diatomaceous earth and hydrotalcite, metal acid salts such as sodium silicate, mica, molybdate, cobalt molybdate and ammonium molybdate, silicone, molybdenum disulfide, calcium stearate, silicon nitride and silicon carbide is proposed. Among these, aluminum hydroxide and cobalt oxide are preferable.

When the gas generating composition of the invention comprises components (a) and (b) and (c) and preferably (d), the content of component (a) is 15 to 45 wt.%, the content of component (b) is 55 to 85 wt.%, the content of component (c) is 0.1 to 15 wt.%, preferably 1 to 10 wt.%, and the content of component (d) is preferably 0.1 to 20 wt.%, more preferably 3 to 15 wt.%.

A preferable example of the composition comprising components (a), (b) and (c) is a composition comprising (a) melamine, (b) a basic copper nitrate and (c) sodium carboxymethylcellulose. In this case, it is preferable that the content of (a) melamine is 15 to 25 wt.%, the content of (b) a basic copper nitrate is 60 to 80 wt.% and the content of (c) sodium carboxymethylcellulose is 0.1 to 10 wt.%.

Another preferable example of the composition comprising components (a), (b) and (c) is a composition comprising (a) melamine, (b) a basic copper nitrate and (c) guar gum. In this case, it is preferable that the content of (a) melamine is 15 to 25 wt.%, the content of (b) a basic copper nitrate is 60 to 80 wt.% and the content of (c) guar gum is 0.1 to 10 wt.%.

A preferable example of the composition comprising components (a), (b), (c) and (d) is a composition comprising (a) melamine, (b) a basic copper nitrate, (c) sodium carboxymethylcellulose and (d) aluminum hydroxide. In this case, it is preferable that the content of (a) melamine is 15 to 25 wt.%, the content of (b) a basic copper nitrate is 60 to 80 wt.%, the content of (c) sodium carboxymethylcellulose is 0.1 to 10 wt.% and the content of (d) aluminum hydroxide is 1 to 15 wt.%.

Another preferable example of the composition comprising components (a), (b), (c) and (d) is a composition comprising (a) melamine, (b) a basic copper nitrate, (c) sodium carboxymethylcellulose and (d) cobalt oxide. In this case, it is preferable that the content of (a) melamine is 15 to 25 wt.%, the content of (b) a basic copper nitrate is 60 to 80 wt.%, the content of (c) sodium carboxymethylcellulose is 0.1 to 10 wt.% and the content of (d) cobalt oxide is 1 to 10 wt.%.

Other preferable example of the composition comprising components (a), (b), (c) and (d) is a composition comprising (a) melamine, (b) a basic copper nitrate, (c) guar gum and (d) aluminum hydroxide.

The gas generating composition of the invention can be molded in a desired shape, and formed into a molded article in the shape of a single-perforated cylinder, a perforated (porous) cylinder or pellets. These molded articles can be produced by a method in which the gas generating composition is mixed with water or an organic solvent and the mixture is extrusion-molded (molded articles in the form of a single-perforated cylinder and a perforated (porous) cylinder) or by a compression-molding method using a pelletizer (molded article in the form of pellets).

The gas generating composition or the molded article obtained therefrom in the invention can be used in, for example, an inflator for an air bag of a driver side, an inflator for an air bag of a passenger side, an inflator for a side air bag, an inflator for an inflatable curtain, an inflator for a knee bolster, an inflator for an inflatable seat belt, an inflator for a tubular system and a gas generator for a pretensioner in various vehicles.

Further, the inflator using the gas generating composition or the molded article obtained therefrom in the invention may be a pyrotechnic type in which a gas is supplied only from a gas generating agent or a hybrid type in which a gas is supplied from both of a compressed gas such as argon or the like and a gas generating agent.

Moreover, the gas generating composition or the molded article obtained therefrom in the invention can also be used as an igniting agent called an enhancer (or a booster) for transferring energy of a detonator or a squib to a gas generating agent.

### Examples

The invention is illustrated more specifically by referring to the following Examples. However, the invention is not limited thereto. In tables, BCN indicates a basic copper nitrate, CMCNa sodium carboxymethylcellulose, Gum guar gum, and BHTK potassium bitetrazole respectively.

### Examples 1 to 13 and Comparative Example 1 and 2

Gas generating compositions each having a formulation shown in Table 1 were produced. A combustion temperature, a gas output (unit "mol/100 g" indicates the number of mols of a generated gas per 100 g of a composition) and amounts of generated CO and NO of these compositions according to theoretical calculations are shown in Table 1.

| | Formulation (wt.%) | Combustion temperature (K) (mol/100 g) | Gas output (mol/100 g) | Amount of generated CO (mol/100 g) | Amount of generated NO (mol/100 g) |
|---|---|---|---|---|---|
| Ex. 1 | melamine/BCN/CMCNa=18.8/78.2/3 | 1463 | 2.16 | 3.6 x 10⁻² | 0 |
| Ex. 2 | melamine/BCN/CMCNa=20.8/76.2/3 | 1358 | 2.28 | 0.12 | 0 |
| Ex. 3 | melamine/BCN/Gum=18.51/78.49/3 | 1449 | 2.17 | 3.5 x 10⁻² | 0 |
| Ex. 4 | melamine/BCN/CMCNa/Al(OH )₃=17.76/74.24/3/5 | 1358 | 2.15 | 3 .1x 10⁻² | 0 |
| Ex. 5 | melamine/BCN/CMCNa/Al(OH )₃=16.72/70.28/3/10 | 1292 | 2.14 | 2.8 x 10⁻² | 0 |
| Ex. 6 | melamine/BCN/CMCNa/Al(OH )₃=15.68/66.32/3/15 | 1177 | 2.13 | 2.2 x 10⁻² | 0 |
| Ex. 7 | melamine/BCN/CMCNa/Co₃O₄ =17.99/74.01/3/5 | 1423 | 2.06 | 3.5 x 10⁻² | 0 |
| Ex. 8 | melamine/BCN/CMCMa/CO₃O₄ =17.18/69.82/3/10 | 1382 | 1.97 | 3.3 x 10⁻² | 0 |
| Ex. 9 | melamine/BCN/Gum/Al(OH)₃ =17.47/74.53/3/5 | 1358 | 2.16 | 3.1 x 10⁻² | 0 |
| Ex. 10 | melamine/BCN/Gum/Al(OH)₃ =16.43/70.57/3/10 | 1281 | 2.15 | 2.7 x 10⁻² | 0 |
| Ex. 11 | melamine/BCN/Gum/Al(OH)₃ =15.39/66.61/3/15 | 1166 | 2.14 | 2.2 x 102⁻² | 0 |
| Ex. 12 | melamine/BCN/Gum/CO₃O₄=17.70/74.30/3/4 | 1408 | 2-07 | 3.4 x 10⁻² | 0 |
| Ex. 13 | melamine/BCN/Gum/CO₃O₄=16.89/70.11/3/10 | 1367 | 1.99 | 3.3 x 10⁻² | 0 |
| Comp. Ex.1 | BHTK/KNO₃=51.44/48.56 | 2393 | 1.26 | 5.1 x 10⁻⁴ | 4.1 x 10⁻³ |
| Comp. Ex. 2 | NaN₃/CuO=61/39 | 1421 | 1.41 | 0 | 1.3 x 10⁻⁶ |

The combustion temperatures in Examples 1 to 13 were all lower than that in Comparative Example 1 of the non-azide based gas generating agent by more than 600°C, and the combustion temperatures in Examples 2, 4 to 6 and 8 to 13 were even lower than that in Comparative Example 2 of the azide based gas generating agent. Moreover, in Examples 1 to 13, NO did not occur theoretically, and it was found that an effect of reducing the amount of generated NO was provided in comparison with Comparative Examples 1 and 2. Further, the gas outputs in Examples 1 to 13 were higher than that in Comparative Example 2 of the azide based gas generating agent by more than 50 %.

### Examples 14 to 19

Gas generating compositions each having a formulation shown in Table 2 were produced. These compositions were tested for a friction sensitivity and a drop hammer sensitivity according to the explosives performance test method of JIS K 4810-1979. The results are shown in Table 2.

| | Formulation (wt.%) | Friction sensitivity (kgf) | Drop hammer sensitivity (cm) |
|---|---|---|---|
| Ex. 14 | melamine/BCN/CMCNa=19.80/77.20/3 | >36.0 | >100 |
| Ex.15 | melamine/BCN/CMCNa/CO₃O₄= 17.18/69.82/3/10 | >36.0 | >100 |
| Ex. 16 | melamine/BCN/CMCNa/Al(OH)₃= 16.72/70.28/3/10 | >36.0 | >100 |
| Ex. 17 | melamine/BCN/CMCNa/Japanese acid clay=20.80/76.20/3/5 | >36.0 | >100 |
| Ex. 18 | melamine/BCN/CMCNa/SiO₂= 20.80/76.20/3/5 | >36.0 | >100 |
| Ex. 19 | melamine/BCN/CMCNa/mica=20.80/76.20/3/5 | >36.0 | >100 |

In Examples 14 to 19, the friction sensitivity exceeded 36.0 kgf, and the drop hammer sensitivity exceeded 100cm. Accordingly, it was identified that the safety in handling was high.

### Examples 20 to 22

Gas generating compositions each having a formulation shown in Table 3 were produced. With respect to these compositions, a melting temperature, a temperature at which to start thermal decomposition and a temperature at which to start TG weight loss were measured with a TAS-type differential thermal analyzer manufactured by Rigaku K.K. A rate of temperature rise in the measurement was 20°C/min, a measurement atmosphere was a nitrogen gas, and an amount of a sample in the measurement was 1 to 2 mg. The results are shown in Table 3.

| | Formulation (wt.%) | Melting (°C) | Temperature at which to temperature start thermal decomposition (°C) | at which to start weight loss (°C) |
|---|---|---|---|---|
| Ex. 20 | melamine/BCN/CMCNa= 20.80/76.20/3 | 206 | 233 | 214 |
| Ex. 21 | melamine/BCN/CMCNa/CO₃O₄= 17.18/69.82/3/10 | 203 | 229 | 211 |
| Ex. 22 | melamine/BCN/CMCNa/Al(OH)₃= 16.72/70.28/3/10 | 204 | 231 | 212 |

In Examples 20 to 22, it was identified that the melting temperature, the temperature at which to start thermal decomposition and the temperature at which to start weight loss were high enough and the thermal stability was good.

### Examples 23 to 27

Gas generating compositions each having a formulation shown in Table 4 were produced. Each of these compositions was molded into a strand. A burning rate was measured in a nitrogen atmosphere at a pressure of 4,900, 6,860 or 8,820 kPa. A burning rate at 6,860 kPa and a pressure index of 4,900 to 8,820 kPa are shown in Table 4.

| | Formulation (wt. %) | Burning rate (mm/sec) | Pressure index |
|---|---|---|---|
| Ex. 23 | melamine/BCN/CMCNa=19.80/77.20/3 | 15.89 | 0.25 |
| Ex. 24 | melamine/BCN/CMCHa/Co₃O₄= 17.99/74.01/3/5 | 15.26 | 0.28 |
| Ex. 25 | melamine/BCN/CMCNa/CO₃O₄= 17.18/69.82/3/10 | 14.03 | 0.16 |
| Ex. 26 | melamine/BCN/Gum/Al(OH)₃= 17.47/74.53/3/5 | 13.98 | 0.18 |
| Ex. 27 | melamine/BCN/Gum/Al(OH)₃= 16.43/70.57/3/10 | 10.15 | 0.20 |

The respective values shown in Examples 23 to 27 reveal that the compositions meet the practical conditions as the gas generating composition for the inflator.

### Examples 28 to 39

Gas generating compositions each having a formulation shown in Table 5 were produced. Each of the gas generating compositions was molded into 2 g of a strand. This strand was installed in a closed bomb having an inner capacity of 1 liter, and the inside of the bomb was purged with nitrogen. Further, the bomb was pressurized to 6,860 kPa with nitrogen. The strand was ignited by passage of current through a nichrome wire, and completely burned. Approximately 20 seconds from the passage of current, a combustion gas was collected in a gas sampling bag, and the concentrations of NO₂, NO, CO and CO₂ were immediately analyzed with a detecting tube.

| | Formulation (wt.%) | Amount of generated NO₂ ppm | Amount of generated NO ppm | Amount of generated CO ppm | Amount of generated CO₂ ppm |
|---|---|---|---|---|---|
| Ex. 28 | melamine/BCN/CMCNa=18.8/78.2/3 | 0 | 55 | 110 | 3000 |
| Ex. 29 | melamine/BCN/CMCNa=19.8/77.2/3 | 0 | 42 | 150 | 1700 |
| Ex. 30 | melamine/BCN/CMCNa=20.8/76.2/3 | 0 | 9 | 130 | 1400 |
| Ex. 31 | melamine/BCN/CMCNa/Al(OH)₃=17.76/74.24/3/5 | 0 | 8 | 100 | 1700 |
| Ex. 32 | melamine/BCN/CMCNa/Al(OH)₃=15.72/71.28 /3/10 | 0 | 13 | 70 | 1900 |
| Ex. 33 | melamine/BCN/CMCNa/Al(OH)₃=16.72/70.28 /3/10 | 0 | 6 | 130 | 2100 |
| Ex. 34 | melamine/BCN/CMCNa/Al(OH)₃=17.72/69.28 /3/10 | 0 | 4 | 160 | 1700 |
| Ex. 35 | melamine/BCN/CMCNa/Al(OH)₃=15.68/66.32 /3/15 | 0 | 5 | 100 | 1700 |
| Ex. 36 | melamine/BCN/CMCNa/CO₃O₄=17.99/74.01/3/5 | 0 | 30 | 110 | 1500 |
| Ex. 37 | melamine/BCN/CMCNa/CO₃O₄=17.18/69.82/3/10 | 0 | 9 | 120 | 1400 |
| Ex. 38 | melamine/BCN/CMCNa/Japanese acid clay=20.8/76.2/3/5 | 0 | 17 | 170 | 2100 |
| Ex. 39 | melamine/BCN/CMCNa/mica=20.8/76.2/3/5 | 0 | 5 | 220 | 2100 |

## Claims

1. A gas generating composition comprising:
(a) 15 to 45 wt% of melamine,
(b) 55 to 85 wt% of a basic copper nitrate, and
(c) 0.1 to 15 wt% of a binder which is at least one selected from the group consisting of carboxymethylcellulose, sodium carboxymethylcellulose, potassium carboxymethylcellulose, ammonium carboxymethylcellulose, cellulose acetate, cellulose acetatebutylate, methyl cellulose, ethyl cellulose, hydroxyethyl cellulose, ethylhydroxyethyl cellulose, hydroxypropyl cellulose, carboxymethylethyl cellulose, fine crystalline cellulose, polyarylic amide, amine products of polyacrylic amide, polyacrylic hydrazid, a copolymer of an acrylic amide and a metal salt of acrylic acid, a copolymer of polyacrylic amide and polyacrylic ester, polyvinyl alcohol, acrylic rubber, guar gum, starch and silicone.

2. The composition of claim 1, further comprising (d) an additive,
wherein the additive (d) is at least one selected from the group consisting of metal oxides selected from the group consisting of copper oxide, iron oxide, zinc oxide, cobalt oxide, manganese oxide, molybdenum oxide, nickel oxide, bismuth oxide, silica and alumina; metal hydroxides selected from the group consisting of aluminum hydroxide, cobalt hydroxide and iron hydroxide; metal carbonates or basic metal carbonates selected from the group consisting of cobalt carbonate, calcium carbonate, a basic zinc carbonate and a basic copper carbonate; composite compounds of metal oxides and metal hydroxides selected from the group consisting of Japanese acid clay, kaolin, talc, bentonite, diatomaceous earth and hydrotalcite, metal acid salts selected from the group consisting of sodium silicate, mica, molybdate, cobalt molybdate and ammonium molybdate, silicones, molybdenum disulfide, calcium stearate, silicon nitrite and silicon carbide.

3. The composition of claim 2, which comprises 0.1 to 15 wt.% of component (c) and 0.1 to 20 wt.% of component (d).

4. The composition of claim 1, which comprises (a) melamine, (b) a basic copper nitrate and (c) sodium carboxymethylcellulose or guar gum.

5. The composition of claim 4, which comprises 15 to 25 wt.% of (a) melamine, 60 to 80 wt.% of (b) a basic copper nitrate and 0.1 to 10 wt.% of (c) sodium carboxymethylcellulose or guar gum.

6. The composition of claim 3, which comprises 15 to 25 wt.% of (a) melamine, 60 to 80 wt.% of (b) a basic copper nitrate, 0.1 to 10 wt.% of (c) sodium carboxymethylcellulose and 1 to 15 wt.% of (d) aluminum hydroxide or 1 to 10 wt.% of (d) cobalt oxide.

7. A molded article of the gas generating composition being in the form of a single perforated cylinder or a perforated cylinder, obtained by extruding the gas generating composition as defined in any one of claims 1 to 6.

8. A molded article of the gas generating composition being in the form of pellets, obtained by compress-molding the gas generating composition as defined in any one of claims 1 to 6.

9. An inflator for air bag, using the gas generating composition as defined in any one of claims 1 to 6 or a molded article thereof.

## Patentansprüche

1. Gaserzeugende Zusammensetzung, umfassend:
(a) 15 bis 45 Gew.-% Melamin,
(b) 55 bis 85 Gew.-% eines basischen Kupfernitrats, und
(c) 0,1 bis 15 Gew.-% eines Bindemittels, das mindestens eines ist, ausgewählt aus der Gruppe bestehend aus Carboxymethylcellulose, Natriumcarboxymethylcellulose, Kaliumcarboxymethylcellulose, Ammoniumcarboxymethylcellulose, Celluloseacetat, Celluloseacetatbutylat, Methylcellulose, Ethylcellulose, Hydroxyethylcellulose, Ethylhydroxyethylcellulose, Hydroxypropylcellulose, Carboxymethylethylcellulose, feinkristalline Cellulose, Polyarylsäureamid, Aminprodukte aus Polyacrylamid, Polyacrylhydrazid, ein Copolymer aus einem Acrylamid und einem Metallsalz von Acrylsäure, ein Copolymer aus Polyacrylamid und Polyacrylester, Polyvinylalkohol, Acrylgummi, Guargummi, Stärke und Silikon.

2. Die Zusammensetzung nach Anspruch 1, weiter umfassend (d) ein Additiv,
wobei das Additiv (d) mindestens eines ist, ausgewählt aus der Gruppe bestehend aus Metalloxiden, ausgewählt aus der Gruppe bestehend aus Kupferoxid, Eisenoxid, Zinkoxid, Kobaltoxid, Manganoxid, Molybdänoxid, Nickeloxid, Bismutoxid, Siliziumoxid und Aluminiumoxid; Metallhydroxide, ausgewählt aus der Gruppe bestehend aus Aluminiumhydroxid, Kobalthydroxid und Eisenhydroxid; Metallcarbonate oder basische Metallcarbonate, ausgewählt aus der Gruppe bestehend aus Kobaltcarbonat, Calciumcarbonat, einem basischen Zinkcarbonat und einem basischen Kupfercarbonat; Kompositverbindungen aus Metalloxiden und Metallhydroxiden, ausgewählt aus der Gruppe bestehend aus japanischem saurem Ton, Kaolin, Talk, Bentonit, Kieselgur (diatomaceous earth) und Hydrotalcit, Metallsäuresalzen, ausgewählt aus der Gruppe bestehend aus Natriumsilikat, Glimmer, Molybdat, Kobaltmolybdat und Ammoniummolybdat, Silikonen, Molybdändisulfid, Calciumstearat, Siliziumnitrit und Siliziumkarbid.

3. Die Zusammensetzung nach Anspruch 2, die 0,1 bis 15 Gew.-% der Komponente (c) und 0,1 bis 20 Gew.-% der Komponente (d) umfasst.

4. Die Zusammensetzung nach Anspruch 1, die (a) Melamin, (b) ein basisches Kupfernitrat und (c) Natriumcarboxymethylcellulose oder Guargummi umfasst.

5. Die Zusammensetzung nach Anspruch 4, die 15 bis 25 Gew.-% (a) Melamin, 60 bis 80 Gew.-% (b) basisches Kupfernitrat und 0,1 bis 10 Gew.-% (c) Natriumcarboxymethylcellulose oder Guargummi umfasst.

6. Die Zusammensetzung nach Anspruch 3, die 15 bis 25 Gew.-% (a) Melamin, 60 bis 80 Gew.-% (b) basisches Kupfernitrat, 0,1 bis 10 Gew.-% (c) Natriumcarboxymethylcellulose und 1 bis 15 Gew.-% (d) Aluminiumhydroxid oder 1 bis 10 Gew.-% (d) Kobaltoxid umfasst.

7. Geformter Gegenstand der gaserzeugenden Zusammensetzung in der Form eines einzelperforierten Zylinders oder eines perforierten Zylinders, erhalten durch Extrudieren der gaserzeugenden Zusammensetzung wie in irgendeinem der Ansprüche 1 bis 6 definiert ist.

8. Geformter Gegenstand der gaserzeugenden Zusammensetzung in der Form von Pellets, erhalten durch Pressformen der gaserzeugenden Zusammensetzung wie in irgendeinem der Ansprüche 1 bis 6 definiert ist.

9. Aufblasvorrichtung für einen Airbag unter Verwendung der gaserzeugenden Zusammensetzung wie in irgendeinem der Ansprüche 1 bis 6 definiert ist oder einem geformten Gegenstand davon.

## Revendications

1. Composition génératrice de gaz comprenant :
(a) 15 à 45 % en poids de mélamine,
(b) 55 à 85 % en poids d'un nitrate de cuivre basique et
(c) 0,1 à 15 % en poids d'un liant qui est au moins un liant choisi dans le groupe constitué de carboxyméthylcellulose, carboxyméthylcellulose de sodium, carboxyméthylcellulose de potassium, carboxyméthylcellulose d'ammonium, acétate de cellulose, acétate-butylate de cellulose, méthylcellulose, éthylcellulose, hydroxyéthylcellulose, éthylhydroxyéthylcellulose, hydroxypropylcellulose, carboxyméthyléthylcellulose, cellulose cristalline fine, amide polyarylique, produits aminé d'amide polyacrylique, hydrazide polyacrylique, un copolymère d'un amide acrylique et d'un sel métallique de l'acide acrylique, un copolymère d'amide polyacrylique et d'ester polyacrylique, alcool polyvinylique, caoutchouc acrylique, gomme guar, amidon et silicone.

2. Composition selon la revendication 1, comprenant en outre (d) un additif,
l'additif (d) étant au moins un additif choisi dans le groupe constitué d'oxydes métalliques choisis dans le groupe constitué d'oxyde de cuivre, oxyde de fer, oxyde de zinc, oxyde de cobalt, oxyde de manganèse, oxyde de molybdène, oxyde de nickel, oxyde de bismuth, silice et alumine ; d'hydroxydes métalliques choisis dans le groupe constitué d'hydroxyde d'aluminium, hydroxyde de cobalt et hydroxyde de fer ; de carbonates métalliques ou de carbonates métalliques basiques choisis dans le groupe constitué de carbonate de cobalt, carbonate de calcium, un carbonate de zinc basique et un carbonate de cuivre basique ; de composés composites d'oxydes métalliques et d'hydroxydes métalliques choisis dans le groupe constitué d'argile acide japonaise, kaolin, talc, bentonite, terre de diatomées et hydrotalcite, de sels d'acide métalliques choisis dans le groupe constitué de silicate de sodium, mica, molybdate, molybdate de cobalt et molybdate d'ammonium, silicones, disulfure de molybdène, stéarate de calcium, nitrure de silicium et carbure de silicium.

3. Composition selon la revendication 2, qui comprend de 0,1 à 15 % en poids de constituant (c) et de 0,1 à 20 % en poids de constituant (d).

4. Composition selon la revendication 1, qui comprend (a) de la mélamine, (b) un nitrate de cuivre basique et (c) de la carboxyméthylcellulose de sodium ou de la gomme guar.

5. Composition selon la revendication 4, qui comprend de 15 à 25 % en poids de (a) mélamine, de 60 à 80 % en poids de (b) un nitrate de cuivre basique et de 0,1 à 10 % en poids de (c) carboxyméthylcellulose de sodium ou gomme guar.

6. Composition selon la revendication 3, qui comprend de 15 à 25 % en poids de (a) mélamine, de 60 à 80 % en poids de (b) un nitrate de cuivre basique, de 0,1 à 10 % en poids de (c) carboxyméthylcellulose de sodium et de 1 à 15 % en poids de (d) hydroxyde d'aluminium ou de 1 à 10 % en poids de (d) oxyde de cobalt.

7. Article moulé de la composition génératrice de gaz qui se trouve sous la forme d'un cylindre à perforation unique ou d'un cylindre perforé, obtenu en extrudant la composition génératrice de gaz comme définie dans l'une quelconque des revendications 1 à 6.

8. Article moulé de la composition génératrice de gaz qui se trouve sous la forme de pastilles, obtenues en moulant par compression la composition génératrice de gaz comme définie dans l'une quelconque des revendications 1 à 6.

9. Gonfleur pour coussin gonflable, utilisant la composition génératrice de gaz comme définie dans l'une quelconque des revendications 1 à 6 ou un article moulé de celle-ci.
